# EUROPEAN PATENT SPECIFICATION

(11) **EP 4 625 320 B1**
(45) Date of publication and mention of the grant of the patent: **23.09.2026**
(21) Application number: 24167532.1
(22) Date of filing: 28.03.2024
(51) Int. Cl.: G06T 7/11, G06T 7/50, G06T 7/60, G06T 7/187

(54) **DERIVING A THREE-DIMENSIONAL MODEL OF A SCENE**
ABLEITUNG EINES DREIDIMENSIONALEN MODELLS EINER SZENE
DÉRIVATION D'UN MODÈLE TRIDIMENSIONNEL D'UNE SCÈNE

(43) Date of publication of application: 01.10.2025
(73) Proprietor: Siemens Aktiengesellschaft, 80333 München (DE)
(72) Inventor: GOLOVLEV, Valeri, Charlotte, NC 28278 (US); KÖRDEL, Martin, 81475 München (DE); VEGA MERCHAN, Luis, Charlotte, NC 28205 (US)
(74) Representative: Siemens Patent Attorneys

(56) References cited:
- WO-A1-2023/214390
- CN-A- 117 557 743
- "Geometric Methods and Applications : For Computer Science and Engineering", vol. 38, 21 June 2011, SPRINGER NEW YORK, ISSN: 0939-2475, article GALLIER JEAN ET AL: "Basics of the Differential Geometry of Surfaces : For Computer Science and Engineering", pages: 585 - 654, XP093176140, DOI: 10.1007/978-1-4419-9961-0_20

## Description

The present invention relates to a method for deriving a three-dimensional model of a scene which comprises at least one object, the method comprising the step of performing a physical measurement on the scene, which leads to a three-dimensional point cloud. The invention further relates to a computer program product for carrying out such a method.

A variety of methods are known for deriving a three-dimensional model of a scene which has been captured by a measurement which yields a three-dimensional point cloud. For example, measurements with optical cameras or laser scanning apparatuses can be used to derive such point distributions. The points in such a point cloud usually collectively represent the surfaces of objects present in the captured scene. It is often challenging to derive a three-dimensional model from the point cloud data, in the sense that the points of the point cloud are assigned to individual objects and the geometry of those objects is (at least approximately) modelled by surfaces which are generated by the corresponding sub-set of the points. This kind of structured model is also often referred to as the "topology" of the captured data. For many tasks, it is necessary to derive this topological information from the raw point cloud data, for example to identify object types comprised in the captured scene and in particular to reconstruct the geometry of identified objects in a data format which is useful for a reverse engineering task. This can be one of the typical data formats used by computer aided design (CAD), computer-aided engineering (CAE) and/or computer-aided manufacturing (CAM) programs. These "CAx data" are mostly given in the form of so-called boundary representations, in other words by defining the geometry of the individual objects by a set of simple boundary surfaces.

One general method to derive such a model is the extraction of so-called geometric primitives from the point cloud data. In other words, the point clouds are segmented into sub-sets of points which represent simple geometric forms such as planes, boxes, cylinders, ellipsoids, and the like. An overview of the relevant segmentation and analysis techniques is given in the publication by A. Kaiser, J.A. Ybanez Zepeda and T. Boubekeur "A Survey of Simple Geometric Primitives Detection Methods for Captured 3D Data", Computer Graphics Forum, vol. 38, no. 1, pp. 167-196, 2019. These techniques include the so-called "random sample consensus" (RANSAC) method, the "region growing algorithm" and "parameter space clustering", where parameters like orientation or curvature of the local surfaces are used as criteria for segmenting the points into subsets of the point cloud. However, even with these available methods it remains challenging to reliably identify those groups of points which belong to a common object, if the captured scene is very complex (e.g. full of many objects and/or showing objects with complex shapes). For example, a curvature-based segmentation is less likely to succeed, if there are many different surface curvatures present in a given object and in particular, if many such objects are included in the captured scene. In this case, over-segmentation often occurs which means that the point cloud is segmented into too many small entities with common characteristics, and the procedure fails to identify extended complex objects as one entity. On the contrary, under-segmentation can be a problem as well, sometimes for the same point cloud, which means that each of the clusters generated in the segmentation comprise several objects or more parts of objects than intended.

Patent application WO 2023/214390 A1 discloses ways of extracting an object-of-interest from a 3D point cloud based on a local curvature value by applying region-growing techniques.

It is therefore a goal of the present invention to provide an alternative method for deriving a three-dimensional model of a scene. This alternative method shall in particular be suited for reliably segmenting point clouds which represent complex scenes with many objects and/or objects with complex shapes. The method shall also favorably be suited to be carried out automatically by means of a computer, i.e. with little or no user interaction during the segmentation of the point cloud. A further goal of the invention is to provide a corresponding computer program product.

These objects of the invention are achieved by claim 1 with respect to the method and by claim 14 with respect to the computer program product.

The method according to the invention serves to derive a three-dimensional model of a scene which comprises at least one object. The method comprises the following steps:
a) performing a physical measurement on the scene, which leads to a three-dimensional point cloud,
b) generating at least one surface, in particular a parametric surface, from points of the point cloud and determining a respective local principal curvature for the individual points of the point cloud,
c) performing a first curvature-based segmentation of the point cloud into at least two groups of points based on at least one threshold level of the local principal curvature,
d) performing a first region-based segmentation of at least one selected group of the groups of points obtained in step c), said segmentation being based on a region-growing method and leading to a plurality of first clusters,
e) determining a remaining point cloud by deselecting a sub-set of these first clusters based on a pre-defined deselection criterion and discarding this sub-set from the point cloud at least for the following step f),
f) determining a plurality of second clusters by performing a second region-based segmentation of the remaining point cloud, said segmentation being based on a region-growing method,

wherein the three-dimensional point cloud (PC) is handled as an octree-based voxelized representation, at least within step b),
and wherein the octree data structure is associated with a spatial resolution which is lower than the spatial resolution of the physical measurement of step a), in particular by a factor of at least two.

In this context, a "scene" is any arrangement of one or more objects in three-dimensional space. Such a scene of real-life objects is captured by a physical measurement in step a), yielding a three-dimensional point cloud which is representative of the scene. In steps b) to f), a virtual model of the captured scene is generated from this point cloud, thereby providing geometrical information on the comprised object(s). Generally, steps a) to f) are preferably carried out in the given order.

The physical measurement of step a) can particularly be an optical measurement or an X-ray measurement. It can comprise a scan, such as a three-dimensional laser scan and/or involve an imaging method such as taking one or more images with an optical camera. In principle, the obtained point cloud can be a surface point cloud or a volume point cloud. However, a surface point cloud is generally preferred in the context of this invention. A surface point cloud is a list of three-dimensional positions (points), at least the majority of which represent positions on surfaces of objects within the captured scene. Such a point cloud can for example be computed from an image, an image sequence or a laser scan. Correspondingly, in step b) one or more virtual surfaces are generated from this point cloud. These surfaces are in particular parametric surfaces, meaning that they can be modelled and expressed mathematically by a parametric equation. This is for example the case for a spline surface, which is the equivalent of a spline curve in three-dimensional space and is assembled from polynomial surface segments (patches). The at least one surface can be generated from the point cloud by a parameter fit of the parametric equation, such that the points of the point cloud lie on the resulting surface or at least very close to the resulting surface. When such a parametric surface equation has been obtained, a local principal curvature can easily be calculated for each point of the point cloud on the surface. At a given point of a surface, two principal curvatures exist, namely the maximum and minimum values of the curvature as expressed by the eigenvalues of the shape operator at that point. For the purposes of this invention, it is most favorable to determine and use the maximum principal curvature in steps b) and c), in particular its absolute value. However, in general it is also possible to use the minimum principal curvature to use or both the minimum and maximum principal curvature values. In general, various methods for estimating a local curvature from an unstructured point cloud are known in the art and can favorably be applied here. An overview of related methods is for example given in the publications "Curvature of Curves and Surfaces - a Parabolic Approach" by Zvi Har'el (1995) and "Three-Dimensional Surface Curvature Estimation using Quadric Surface Patches", by I. Douros and B. Buxton, University College London (2002) as well as in other publications cited therein. The applied methods can be broadly divided in two categories: fitting methods that fit analytic surfaces to data and derive differential properties analytically and discrete methods that are generally based on concepts of discrete differential geometry. The first category comprises surface fitting with a polynomial surface at a local area. The surface can be a quadric surface, a cubic surface, or a general polynomial surface. Here quadric surfaces can include a cone, ellipsoid, or a rotationally symmetric subtype (spheroid, circular cone, etc).

In step c), a segmentation of the point cloud is performed on the basis of those local principal curvature values. This is achieved by sorting the points into two or more sub-groups, based on whether the associated curvature value of a given point is above or below a pre-determined threshold. For sorting the points into more than two such groups, more than one threshold has to be regarded, the number of groups generally being one higher than the number of thresholds. In other words, the points are sorted into a low-curvature group, a high-curvature group and optional groups for intermediate curvatures. In step d), a further segmentation is carried out on at least one of those groups, which have been formed based on local curvature. Most favorably, this further segmentation is carried out (at least) on a group of point with a relatively low curvature, i.e. a curvature below a given threshold. The segmentation of step d) is based on a region-growing method, which is a method generally well known in the art. By this method, a subset of the point cloud is segmented into further sub-groups which form spatially connected or spatially close regions within the respective subset. This is achieved by starting from initial seed points for each region and iteratively examining whether neighbouring points should be added to the region, based on one or more pre-defined "region-membership criteria". In the context of this invention, spatial proximity is a particularly favourable criterion for determining region membership. However, a similarity in another property associated with the points such as local surface orientation or a depth or colour value can be used as an additional or alternative criterion. By applying this first region-based segmentation on the selected group of points, a plurality of first clusters is obtained, in other words a plurality of further sub-groups of the selected group of points. Each of these first clusters forms a region of spatially adjacent points within the selected group of points (e.g. the low-curvature group).

In step e), a sub-set of these first clusters is deselected and disregarded in the next step. This deselection is based on at least one pre-defined selection criterion such as a size of the first cluster or another property associated with its points such as a local surface orientation or a spatial extension of the cluster in one or more pre-determined directions. For example, if the selected group of points is a group with a comparatively low local curvature, point clusters corresponding to walls and/or floor of a building can be deselected here, based on the typical spatial orientations and typical spatial extensions of floor and wall parts that have been captured by the measurement in step a). Also, some first clusters can be deselected based on a comparatively small cluster size, which can be indicative of an imaging artifact or an insignificant object. Such a deselection can be beneficial for cleaning up the point cloud before a further segmentation. The deselected points can for example be deleted or (more favorably) saved as a separate subset of the original point cloud, e.g. together with the corresponding information on their segmentation into first clusters.

In the following step f), a further region-based segmentation is carried out on the remaining point cloud, i.e. on those points of the point cloud that have not been deselected. The groups obtained from the segmentation of step c) can in particular be reunited before this second region-based segmentation. In other words, this second region-based segmentation starts "from scratch", from the original point cloud as one set of points, apart from the fact that a certain subset of those points has been deselected from consideration in this step. This means that also the separation between those first clusters which have not been deselected can favorably be removed before carrying out the segmentation of step f).

The segmentation of step f) is again based on a region-growing method, in analogy to step d). It leads to a plurality of second clusters, each cluster forming a spatially connected region within the remaining point cloud. These second clusters can serve as a basis for assigning objects or parts of objects such as geometric primitives within the point cloud. In other words, at least a sub-set of these second clusters can be used to identify objects within a virtual three-dimensional model of the scene, as represented by the point cloud. The result of the described series of measurement, analysis and segmentation steps is therefore a plurality of point clusters, where the clusters represent whole objects and/or surface sections of objects and can therefore serve as a basis for object classification. This structured (segmented) geometrical information therefore represents a three-dimensional model of the scene in the sense of the current information. A further optional step of identifying the clusters with specific objects or parts of objects (labelling) can be comprised in the method as well, but even without such labels the segmented geometrical information can serve as a virtual three-dimensional model of the scene that has been captured.

The three-dimensional point cloud is handled as an octree-based voxelized representation. This applies at least to the determination of the local principal curvature within step b) but also optionally for the segmentation procedures of steps c), e, f) and any further optional segmentation steps. An octree is a tree-like data structure, in which the individual nodes either have eight successors or no successors. Such a data structure can be used to efficiently describe the location of points within a pre-defined regular three-dimensional grid (the grid defining the corners of pre-defined voxels). In other words, the point positions obtained from the measurement are each mapped to the position of the nearest point on the regular grid. The spatial resolution of this underlying grid is termed the "octree resolution", and the value of this resolution has a significant influence on the result of any further data processing, such as curvature calculation and segmentation. Using such a grid-based data structure generally allows a very efficient handling and processing of point cloud data.

The octree data structure is associated with a spatial resolution which is lower than the spatial resolution of the physical measurement of step a), in particular by a factor of at least two (in each dimension of the grid). More preferably, the octree resolution can by lower than the measurement resolution by a factor between three and four. An advantage of this comparatively low octree resolution is that the influence of measurement noise on the computation of local principal curvature is smoothed out somewhat. If the octree resolution is too high and too close to the measurement resolution, the calculated local curvature values of surface points of flat objects become artificially high due to measurement noise in the point position values. A sufficiently low octree resolution can therefore help to correctly group and identify the points associated with low-curvature elements in the scene.

An important advantage of the present invention is that step e) allows a deselection of parts of the point cloud with lower relevance for the identification of the main objects of the scene which in turn allows a more effective segmentation in the sub-sequent step f). Such parts with lower relevance can for example be the floor and/or wall elements of an indoor scene. If they are disregarded in the main segmentation step, a much easier and more accurate segmentation of the remaining relevant objects of an indoor scene can be performed and used as a basis for object identification. When floor and wall elements are removed, the remaining objects become separated islands within an otherwise empty space, and their clustering into correct groups is much easier in the absence of the irrelevant parts. A key feature of the invention is that the deselection of lower-relevance parts is in turn based on two preceding segmentation steps: a curvature-based segmentation followed by a region-based segmentation. In particular, if the region-based segmentation is carried out on a low-curvature subset, the parts of the points cloud associated with wall and floor elements are easily segmented into corresponding spatially connected first clusters. Flat areas of other, more relevant objects will be segmented into such first clusters as well, but they can be differentiated from the less relevant floor and wall elements based on selection criteria such as orientation and spatial extension. Other properties such as the colour within an image can additionally be used for this differentiation, if available. In summary, the method according to the present invention provides an easy and accurate way of automatically segmenting a point cloud into clusters of points which form a suitable base for assigning objects and/or parts of objects in the corresponding scene. All steps a) to f) can preferably be performed automatically by means of a computer, optionally based on some user input if necessary. The method is in other words a computer-implemented method.

Besides the above method, the invention relates to a computer program product with program code, which is stored in machine-readable form on a medium, for carrying out a method according to the invention or one or more preferred embodiments of the invention when the program code is executed on a computer. The advantages of the computer program product correspond to the above-mentioned advantages of the method according to the invention.

Advantageous configurations and embodiments of the method according to the invention follow from the claims dependent on claim 1 as well as the following description. The advantageous features of the method and computer program product can generally be combined.

According to a generally favorable embodiment, the method can comprise the following additional step:
g) assigning at least a sub-set of the second clusters to at least one pre-defined object type, thereby classifying at least one object or part of an object in the scene.

In other words, at least some of the second clusters are labelled as objects or parts of objects of a given type. Those labels can be selected from a pre-defined set of given object types, for example comprising the object types "floor", "wall" and/or "ceiling" of a building, "machine", "work piece", "human", "piping" and so on. Optionally, some of the first clusters deselected in step e) can be labelled (classified) in this manner as well. This particularly applies to low-curvature "floor" and "wall" clusters deselected in step e) in order to clean up the point cloud for an easier segmentation and identification of the remaining objects in the scene. The classification step can generally be performed manually, automatically or semi-automatically. Many methods are known in the art for an automatic or semi-automatic classification of captured objects (object detection), for example RANSAC based object classification. The object classification can generally be based on detecting the shape of an object after a segmentation of its surface into a set of geometrical primitives, as discussed in the above-mentioned publication by A. Kaiser et al. The first or second clusters derived by the method of the present invention can generally also be associated with such geometrical primitives. This means that the individual clusters can be classified as certain types of geometrical primitives based on the shape of this sub-set of points. Optionally, the parameters of such geometrical primitives can be fitted to the sets of points in those clusters in order to optimally match the shape of their spatial distribution. This approach can be very useful for generating a CAx file from a captured industrially manufactured object (an industrial product) for reverse engineering purposes.

According to a generally advantageous embodiment, the scene can be an indoor scene, in other words a scene within a building. In particular, the scene can comprise at least one floor, wall and/or ceiling of a building as objects of the scene. The described invention is particularly useful for identifying such parts of the building with typically flat surfaces and separating them from the remaining object(s) to allow an easier segmentation of further objects. If a plurality of further objects is present in the scene, their separation and optional classification becomes much easier after separating the points corresponding to floor and wall element(s) of the building from the point cloud.

In another generally favorable embodiment, the scene comprises an industrial site or a part of an industrial site. This industrial site can in particular be a manufacturing plant (factory), a processing plant and/or a chemical plant. The scene involving such an industrial plant can generally be an indoor or outdoor scene. The advantages of the present invention are particularly useful with respect to segmenting point clouds captured for such scenes because there are usually many different objects present in the scene and those objects (such as machines, other factory infrastructure and manufactured products) can in turn have a complex structure and differ widely from each other in terms of size and geometry.

Additionally or alternatively, the scene can comprise one or more industrially manufactured objects (finished industrial products and/or intermediate manufacturing products). Even if only one such product is present in the scene, the method according to the invention can be advantageous for analyzing the shape of the object, in particular by segmenting its geometry into a set of geometrical primitives, as defined by A. Kaiser et al. The invention can enhance such a segmentation for example by removing points of flat surfaces in the background of the image and/or by deselecting the (typically high-curvature) points in the transition regions between the surfaces of the geometric primitives, allowing an easier segmentation and classification of those (typically lower-curvature) surfaces between those edges. In this fashion, a CAD file, in particular on the basis of boundary representations, can be derived from the captured scene. Therefore, the method of the present invention can favourably be applied as part of an overall reverse engineering method.

According to a first favorable variant of step d), the selected group of points can be a group with a corresponding curvature below a pre-determined threshold value. In other words, the region-based segmentation of step d) can be performed on a group of points with comparatively low curvature. This can be particularly useful for forming segments corresponding to floor and wall elements within an indoor scene and for deselecting those floor and wall elements in the subsequent step, allowing an easier and/or more robust segmentation of the remaining objects of the scene in step f).

According to an alternative, second favorable variant of step d), the selected group of points can be a group with a corresponding curvature above a pre-determined threshold value. This can correspondingly allow a segmentation of high-curvature transition structures, such as the edges and corners between geometrical primitives which form the main bounding surfaces of many objects (particularly of many industrial products). By disregarding some of those comparatively high-curvature areas in the region-based segmentation of step f) the segmentation and identification of geometrical primitives which bound an object can be significantly enhanced.

According to a generally preferred embodiment, at least one pre-defined deselection criterion is applied in step e), this criterion being a size and/or a local surface orientation associated with the first clusters. In this context, the "size" can be a number of points comprised in the cluster or a spatial extension of the point locations with respect to one or more spatial directions. For example, a first cluster can be deselected because the number of its member points is below a given threshold in order to remove insignificant clusters, e.g. clusters associated with very small objects or noise from the data acquisition. In a similar fashion, a cluster can be deselected based on a low volume of an associated bounding box. Such a "bounding box" is generally defined as the smallest enclosing box of a point set (minimum bounding box). It can in particular be an axis-aligned minimum bounding box (AABB), where the edges of the box are constrained to be parallel to predefined coordinate axes, such as the axes of a cartesian coordinate system. Additionally or alternatively, some first clusters can be deselected because their spatial extension is above a given threshold or within a pre-defined range of values. This "spatial extension" can in particular be defined with respect to one or more pre-defined axis orientations, e.g. the axes of a cartesian coordinate system. In this fashion, first clusters associated with wall elements can be identified based on the typical extension of walls in the vertical direction (z). Additionally or alternatively, some first clusters can be deselected because their local surface orientation is within a pre-defined range. The local surface orientation of a given point is represented by the orientation of the surface normal vector and this vector can for example be calculated together with the local curvature as part of step b) for the respective points. The orientation of the surface normal can be another important property on which the deselection can be based, e.g. because the orientation is typical for a floor, wall, or ceiling element. Further favorable selection criteria may be an associated depth or colour value of a point, if such values are available from the measurement method applied in step a). If the regarded property is a property associated with individual points, the property may be averaged over the points of the cluster, or the median value can be determined for applying the respective selection criterion. Alternatively to regarding the average or mean, the minimum or maximum values or the covered range can also be considered for one or more relevant properties. Overall, step e) allows the deselection of less relevant parts of the point cloud based on the local curvature and at least one other property of a subgroup (first cluster) obtained in the segmentation of step d).

According to another generally preferred variant, the spatial resolution of the octree data structure used in step b) can be determined automatically by a computer. In particular, this automatic determination can be based on the following sub-steps:
- deriving a plurality of histograms of curvature values for the point cloud within the octree data structure, each histogram obtained by using a different spatial resolution of the data structure,
- performing a curve fitting procedure of a plurality of Gaussian functions to each histogram and
- deriving an optimum spatial resolution of the data structure based on an achieved separation of the plurality of Gaussian functions obtained from the curve fitting procedures.

In other words, a peak separation from a multiple-Gaussian peak fit is determined several times for varying octree resolutions, and one of these octree resolutions is chosen for further processing of the point cloud, because the achieved separation is for example highest or closest to a pre-determined target value. In this context, the term "histogram" is to be understood broadly and covers any dependence of the frequency of a point distribution as a function of associated curvature (e.g. on a linear or logarithmic or any other scale), even if not expressed in the shape of a bar diagram.

The number of Gaussian functions used in the multiple-Gaussian peak fit can either be determined automatically or set to a default (pre-defined) value or selected by a user interaction. The number of Gaussian functions needs to be two or higher in order to calculate a separation of the Gaussian peaks as obtained from the fitting procedure. In this context, the "separation" of two Gaussian functions is the distance between the peak centres of the individual Gaussian curves. If more than two Gaussian functions are used in the fitting procedure, a plurality of such separation values (between a plurality of pairs of peaks) can be used as a criterion for determining the optimum octree resolution. During the curve fitting procedure, three parameters are ideally determined for each of the Gaussian functions considered in the fit. These independent fitting parameters are the position of the peak centre on the abscissa, the peak height (or corresponding peak area) and the peak width (for example expressed as the corresponding standard deviation or root-mean-square width). Before carrying out the peak fitting procedure, a normalization of the abscissa can optionally be performed for the individual data sets. In general, the abscissa of each histogram can for example be a linear scale of curvature values or a logarithmic scale of curvature values. The normalization can also preferably be performed automatically by a computer, e.g. by normalizing each data set to the peak position of the Gaussian peak with the highest associated curvature or the highest curvature values which supersede a given threshold (e.g. highest calculated curvature values above a noise threshold).

According to another generally preferred variant, the three-dimensional point cloud can also be handled as an octree-based voxelized representation during steps b) and/or d) as well as step f). In this case, the spatial resolution associated with this data structure can be different for the different steps. In other words, the point cloud data can be changed to a voxelized representation with different resolution between the various steps. In particular, the spatial resolution can be lower for step f) than for step d). It can also be lower than the spatial resolution used for step b). A general advantage of this comparatively low resolution in step f) is that it is easier for spatially separated parts of complex objects to "grow together" to form one common object in this step and in particular to bridge any potential gaps in the point cloud which can be caused by the deselection of clusters of points in the previous step e). The resolution of the voxelized representation used for steps b) and d) can preferably be the same.

According to another preferred embodiment, a second curvature-based segmentation of the point cloud or a subset thereof into at least two groups of points can be performed between steps e) and f). This can particularly be useful as an initial segmentation step as a basis for a further deselection procedure. This procedure can involve deselecting other less relevant groups of points from the point cloud, in addition to the points already deselected in step e).

According to a first variant of this further deselection procedure, a first further region-based segmentation can be carried out on a first group of points obtained from the second curvature-based segmentation. This first group of points can be associated with a curvature below a pre-determined threshold, in other words these points form a low-curvature sub-set. The first further region-based segmentation leads to a plurality of spatially connected clusters (regions), some of which can be deselected based on a pre-defined deselection criterion and discarded from the point cloud at least for carrying out step f). The pre-defined deselection criterion can for example be chosen from one of the criteria described in the context of step e) above. This further deselection of some clusters of low-curvature points can for example help to identify and disregard regions associated with lower-curvature parts of the building or its infrastructure, for example piping with relatively large pipe diameters.

According to a second variant of this further deselection procedure, a second further region-based segmentation can be carried out on a second group of points obtained from the second curvature-based segmentation. This second group of points can be associated with a curvature above a pre-determined threshold, in other words these points form a comparatively high-curvature sub-set. The second further region-based segmentation leads to a plurality of spatially connected clusters (regions), some of which can be deselected based on a pre-defined deselection criterion and discarded from the point cloud at least for carrying out step f). The pre-defined deselection criterion can also be chosen from the above-mentioned criteria. This further deselection of some clusters of high-curvature points can for example help to identify and disregard regions associated with higher-curvature parts of the building or its infrastructure, for example regular structures of the ceiling with relatively sharp edges. These two variants of further deselection procedure can also be applied in combination.

In another generally favourable embodiment, a further step can be performed to check whether any second clusters obtained in step f) are associated with a bounding box that has at least 30% of the volume of a bounding box associated with the entire point cloud. Those second clusters that fulfill this criterion are classified as so-called super clusters, and any such super clusters are divided into smaller clusters in a further step. This sub-division of super clusters can in particular be performed by applying a further region-based segmentation, where the size of the bounding box of the generated regions is constrained to a pre-determined upper limit. This upper limit can for example expressed as a maximum volume and/or a maximum spatial extension with respect to one or more selected coordinate axes. Optionally, this further step of identifying and sub-dividing any super clusters can also be applied to any first clusters deselected in step e), e.g. before a common visualization and/or classification of first and second clusters in order to derive a comprehensive three-dimensional model of the captured scene.

Further advantages and details of the invention may be found in the exemplary embodiments described below and in the drawings, of which:
Figure 1 shows a perspective view of an exemplary point cloud,
Figure 2 shows a frequency distribution of the local maximum curvature for such a point cloud,
Figure 3 shows a similar frequency distribution obtained for a different octree resolution,
Figure 4 shows an example of a multiple-Gaussian fit to a frequency distribution,
Figure 5 shows a schematic flow chart for a method according to the invention,
Figure 6 shows a perspective view of a remaining point cloud after carrying out the method,
Figure 7 shows a schematic flow chart for selected steps of an alternative method,
Figure 8 shows another exemplary point cloud,
Figure 9 shows the corresponding frequency distribution of the local maximum curvature and
Figure 10 shows a perspective view of a corresponding remaining point cloud.

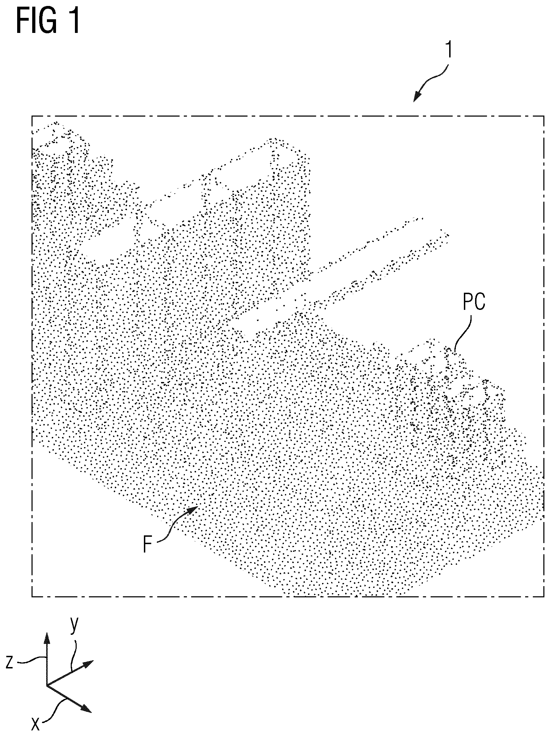

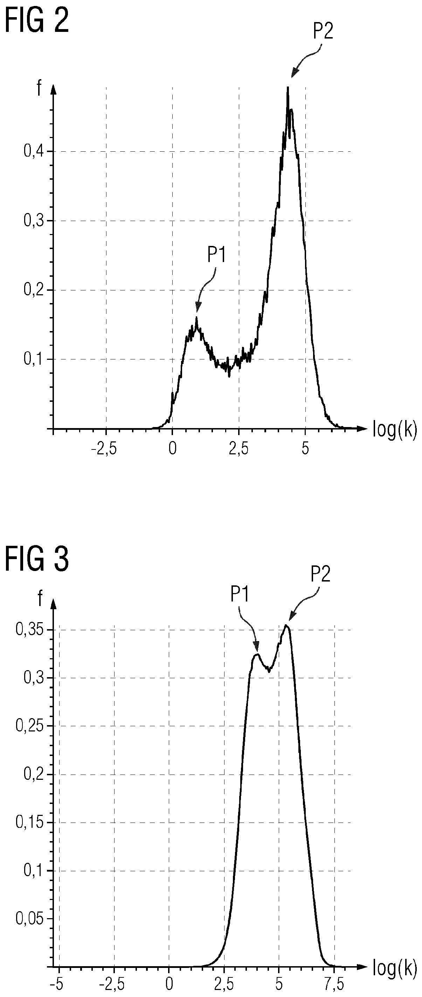

Figure 1 shows a perspective view of a point cloud PC which can be acquired and processed according to the method of the present invention. The point cloud PC is representative of a scene 1 which has been captured by a physical measurement according to step a) of the method, for example by an optical imaging technique. In this case, the scene 1 is an indoor scene of a factory which comprises many different objects such as various manufacturing machines, piping and other building infrastructure as well as the floor F of the building. The point cloud PC is a three-dimensional point cloud, where the positions of the individual points are described in terms of cartesian coordinates x, y, and z. In this example, the point cloud PC is a so-called surface point cloud, where the comprised points indicate locations on the surfaces of the objects of the captured scene. From such a point cloud PC, one or more parametric surfaces are generated in step b) of the method. This can be a spline surface or a plurality of spline surfaces, which represent the local surfaces of the imaged objects. The techniques for automatically generating such local parametric surfaces from a disordered point cloud are well known in the art of imaging and computer vision. For each point of the point cloud PC, two local principal curvature can be derived from the corresponding parametric surface: a minimum local principal curvature k1 and a maximum local principal curvature k2. In principle, each of these two values can be used as the "curvature k" for further analysis. Alternatively, in some cases a derived curvature parameter k can be calculated, such as Gaussian curvature k = k1 * k2, for quantifying a local curvature property around each point of point cloud PC. In Figure 2, a plot of the frequency f of the resulting curvature distribution is shown as a function of the logarithm of the maximum local principal curvature k for the point cloud PC of Figure 1. In a broad sense of the term, this curve therefore represents a "histogram" of the maximum curvature distribution of the point cloud (in this example on a logarithmic scale). The frequency distribution of Figure 2 comprises two clearly distinguishable peaks P1 and P2. The first peak P1 corresponds to lower-curvature regions of the scene, such as floor areas and wall panels. The second peak P2 corresponds to higher-curvature regions of the scene such as the surfaces of machinery and piping. To obtain this curvature distribution, the position data of the three-dimensional point cloud have been handled as an octree-based voxelized representation. In other words, the individual points have been mapped to a regular grid with a given octree resolution. The shape of the histogram and the separation of the comprised peaks generally depend on the applied octree resolution. The applied octree resolution for generating the histogram of Figure 2 was comparatively low. In contrast, Figure 3 shows a corresponding frequency distribution for the point cloud PC of Figure 1, obtained with a higher octree resolution. In both examples, the applied octree resolution is lower than the inherent spatial resolution of the applied imaging method. However, in Figure 3, the applied octree resolution is closer to the imaging resolution. Because of this, the distribution of Figure 3 is shifted to higher curvature values, in particular for the lower-curvature peak P1. The reason for this shift is that when the octree resolution is too close to the imaging resolution, the derived curvature values are dominated by sampling noise. In other words, the applied grid is too fine for deriving meaningful curvature values for the individual points. This finding is exploited in an advantageous embodiment of the present invention. In this embodiment, the method comprises the additional step of automatically determining a suitable spatial resolution of the underlying octree data structure, based on which the curvature distribution is determined. In order to do so, a plurality of curvature histograms is derived with different underlying octree resolutions, such as the two graphs of Figures 2 and 3. For each of these histograms, a multiple-Gaussian curve fit is performed, and the optimum octree resolution is derived based on the achieved separation of at least two Gaussian curves of this multiple-Gaussian fit. For example, the achieved separation can be maximized by tuning the octree resolution, or the octree resolution can be determined for which the achieved separation comes closest to a pre-determined target value.

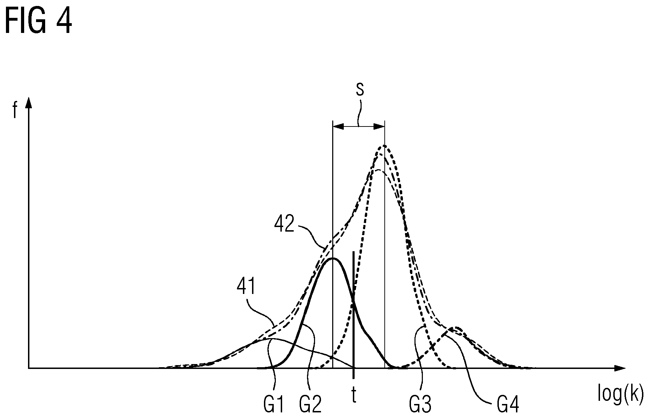

Figure 4 shows an example of a multiple-Gaussian curve fit to a similar distribution of the frequency f of the logarithmic curvature k of a point cloud. Curve 41 represents the distribution obtained from a measured point cloud PC, based on a given octree resolution. Curve 42 represents the result of a multiple-Gaussian curve fit, in this case a curve fit with four Gaussian functions G1 to G4. In general, and independent of the number Gaussians, three free parameters can be optimized for each Gaussian function, namely the peak location on the abscissa, the peak height, and the peak width. This leads to a total of twelve fitting parameters in the example of Figure 4. In general, the number of Gaussian functions used for the curve fit can also be higher or lower, it only has to be at least two. In principle, the number of Gaussian functions used for the fit can either be set manually by a user or determined automatically by a computer program. Methods for this are generally known in the art, and a semi-automatic method is also possible, where a user sets the value based on an automatically generated proposal. One result from the multiple-Gaussian fit is that a separation can be determined for each pair of peaks. As an example, the separation s is indicated in Figure 4 for the peaks G2 and G3. Any of these separation values for any pairs of peaks can in principle be used as a basis for automatically optimizing the underlying octree resolution for the curvature determination in step b). In particular, it is useful (but not necessary) to use the separation of neighboring peaks as a basis for this optimization. It is also possible to use several such separation values as multiple criteria for the optimization procedure. In addition to automatically determining an optimum octree resolution, the multiple-Gaussian fit to the curvature distributions can also be used to automatically derive a threshold value t to be used for the curvature-based segmentation in the following step c). For example, as shown in Figure 4, a threshold value t can be set to the crossing point of two neighboring Gaussian functions G2 and G3 from the multiple-Gaussian peak fit. However, many alternative methods can be devised to automatically derive a threshold value t from the fitting result, such as a given distance from a peak center on the abscissa or a given intermediate point between two peak centers, e.g. defined by a relative distance expressed in percent of the corresponding peak separation. Many alternatives are possible here, all of which have in common that the octree resolution and/or the threshold value are determined automatically based on the resulting fitting parameters of the multiple-Gaussian curve fit. In addition to this automatic peak fitting, an automatic scaling of the abscissa of the frequency distributions can optionally be performed. As can be seen from a comparison of Figures 2 and 3, the position of the highest-curvature values on the abscissa is not significantly affected by the change in octree resolution. This is because the highest values are usually limited by the measurement resolution and not by the applied grid resolution. Consequently, they can be used for an automatic scaling of the abscissa, if required.

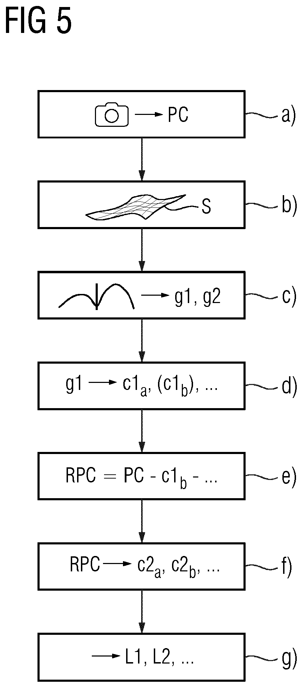

Figure 5 shows a schematic flow chart for the steps a) to g) of a method according to an embodiment of the invention. Overall, the method serves to derive a three-dimensional model of a scene 1 by acquiring and processing a point cloud PC like the one shown in Figure 1. In step a), a measurement is performed by an imaging method, and the point cloud PC is generated. In the subsequent step b), one or more parametric surfaces S are generated from this point cloud PC and a corresponding maximum local principal curvature is determined for the individual points of the point cloud. This processing can be based on an octree-based voxelized representation of the point cloud PC, with an automatically determined octree resolution as explained in the context of Figures 2 to 4. One or more threshold levels t can also be automatically determined. In the subsequent step c), a first curvature-based segmentation of the point cloud PC is performed. Here, the points are sorted into a plurality of bins based on the associated curvature values. For example, as indicated in the sketch, they can be sorted into two bins depending on whether the associated curvature is higher or lower than a threshold value. If more than two threshold values are used, the number of bins can correspondingly be higher. Advantageously, the number of bins can correspond to the number of Gaussian peaks used in the multiple-Gaussian peak fit and can exceed the number of applied threshold values by one. In summary, the point group PC is segmented into at least two groups of points: a lower-curvature group g1, a higher-curvature group g2 and optionally more such groups. In the example of Figure 5, the low-curvature group g1 is used for further processing in step d). Additionally or alternatively however, the high-curvature group g2 or any further such group can be processed in a corresponding way.

In step d), the curvature-based group g1 is segmented further by applying a region growing method, which leads to a plurality of so-called first clusters c1ₐ, c1_{b}, and so on. The region growing method is generally well known in the art. In this context, the spatial proximity of the individual points can be used as the main or sole region membership criterion. However, other properties of the points can in principle be used as alternative or additional membership criteria. In any case, the first clusters c1ₐ, c1_{b}, ... obtained from the region growing method form spatially connected sub-sets of the group g1.

In the subsequent step e), some of these first clusters are deselected from the original point cloud PC, thereby leading to a "remaining point cloud" RPC. In the example of Figure 5, the first cluster c1_{b} is deselected, which is indicated by the brackets in the box of step d). The subtraction equation of step e) also indicates this deselection. The deselection can take place based on one or more pre-determined deselection criteria, for example based on the number of points in the first cluster, the spatial extension in one or more dimensions, the local surface orientation and/or other properties of the cluster or its points. The term "deselection" does not necessarily imply that the corresponding points are deleted from the whole data set, but rather that they are disregarded in the subsequent step f). For example, if the segmentation step d) is performed on a low-curvature group g1, some first clusters corresponding to floor and wall segments of an indoor scene can be deselected in this step, thereby allowing an easier segmentation and identification of objects in the remaining point cloud which has been cleaned up in this way. This can address the above-mentioned problems of over-segmentation as well as under-segmentation.

In the subsequent step f), a second region-based segmentation is carried out on the remaining point cloud RPC. Again, a region-growing algorithm is applied, leading to a plurality of second clusters c2ₐ, c2_{b}, and so on which also form spatially connected groups of points. Because of the previous deselection of the sub-set c1_{b} of a curvature-based group g1, this segmentation is easier in the sense that is has a higher success rate of segmenting the remaining point cloud into subsets which represent individual objects in the captured scene 1. In the optional subsequent step g), one or more of the resulting second clusters c2ₐ, c2_{b}, ... and optionally also one or more of the resulting first clusters c1ₐ ,c1_{b}, ... can be classified as objects or parts of objects of the scene. This can be done by manually or automatically assigning pre-defined object labels L1, L2, ... to selected first and/or second clusters.

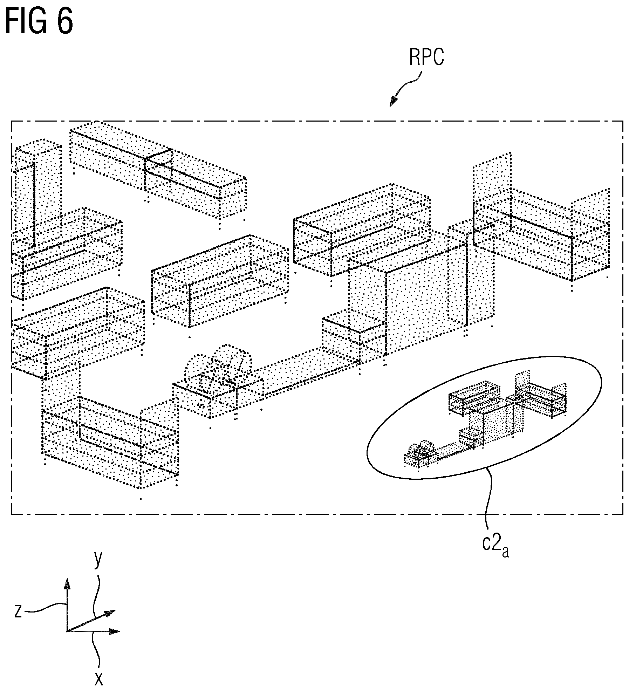

Figure 6 shows an example of a remaining point cloud RPC which as been obtained by performing steps a) to e) of the method for a scene 1 of an indoor industrial manufacturing site. As the points in the original point cloud PC corresponding to low-curvature floor F and wall elements have been deselected according to step e), the remaining point cloud RPC is segmented much more easily into regional clusters which represent the individual machines of the factory than the full point cloud PC. The region-growing algorithm applied in step f) on the remaining point cloud RPC is successful in grouping points of complex objects such as the manufacturing machine represented by the second cluster labelled as c2ₐ. This second cluster c2ₐ has a relatively large spatial extension, particularly with respect to the y coordinate.

However, it is not excessively large, i.e. the volume of its minimum bounding box does not exceed 30% of the minimum bounding box of the whole point cloud PC. If this were the case, the resulting second cluster c2ₐ could optionally be labelled as a "super cluster", and it could be segmented into smaller sub-elements in an optional subsequent step.

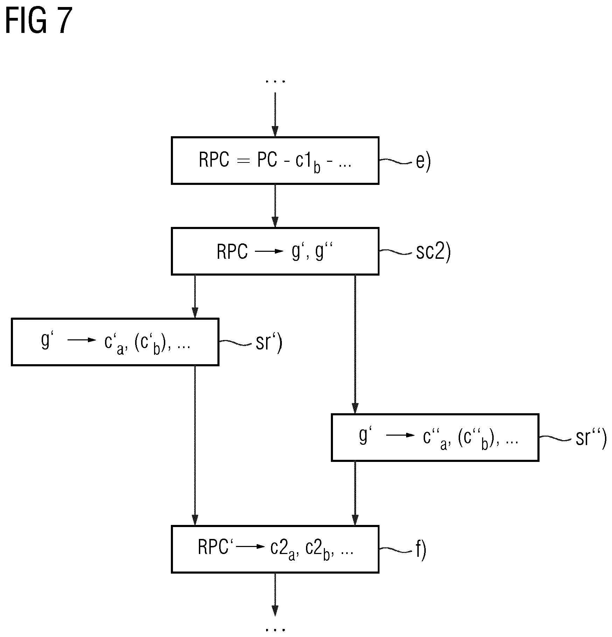

Figure 7 shows a schematic flow chart for selected steps of a method according to another embodiment of the invention. The figure shows steps e) and f) which are analogous to the previous example, and three additional steps which are performed between steps e) and f). The preceding steps a) to d) and the subsequent step g) can be analogous to the example of Figure 5. In the present example, step e) is followed by a second curvature-based segmentation step sc2) which is carried out on the remaining point cloud RPC. Similar to the first curvature-based segmentation in step c), the individual points are segmented into two or more groups of points g', g", ... based on their maximum local curvature and one or more pre-determined threshold values. Subsequently, a first further region-growing segmentation step sr') is performed on one such group g', and a second further region-growing segmentation step sr") is performed on another such group g". In analogy to step d), this leads to a plurality of further regionally connected clusters c'ₐ, c'_{b}, ... as subsets of the group g' and another plurality of further clusters c"ₐ, c"_{b}, ... as subsets of group g". Some of these further clusters are deselected based on one or more pre-determined criteria, as indicated by the brackets for clusters c'_{b} and c"_{b}. For example, the deselection criteria can be chosen such that points corresponding to typical low-curvature building infrastructure (like pipes with large diameters) are deselected from the low-curvature group g', and points corresponding to typical high-curvature building infrastructure (such as patterns in the ceiling) are deselected from the high-curvature group. As a result, an updated remaining point group RPC' is obtained and used for further processing in step f). These optional steps sc2), sr') and/or sr") help to clean up and remove further objects from the point cloud, thus simplifying a segmentation of the remaining point cloud RPC', even if its remaining points represent complex, extended objects like the cluster c2ₐ in Figure 6. This task is much easier after the removal of standard infrastructure elements in addition to the removal of floor and wall elements in previous step e).

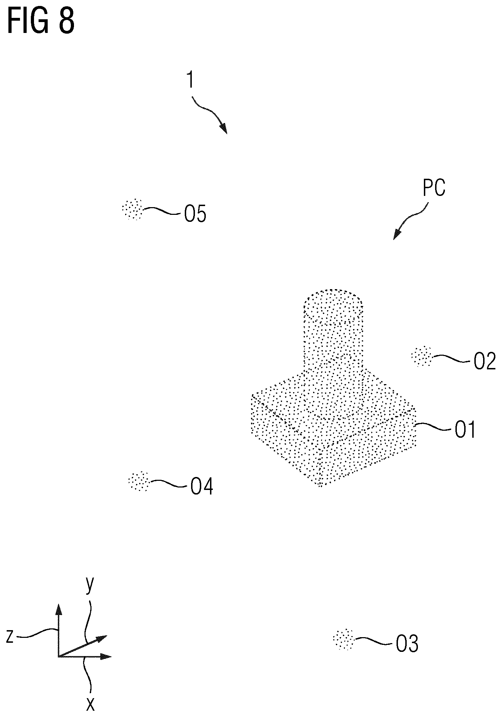

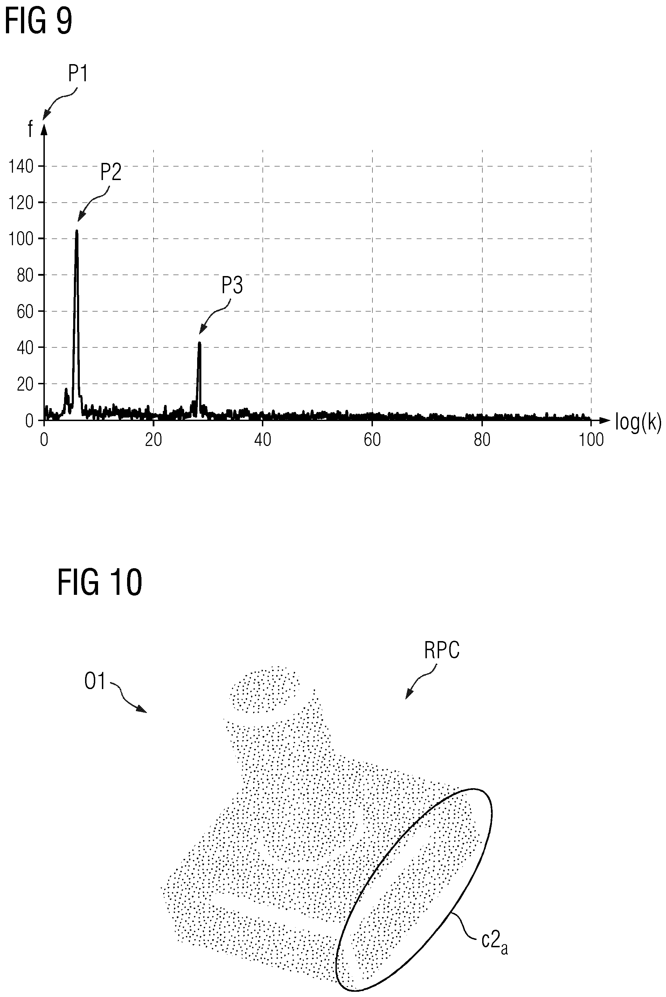

Figure 8 shows another exemplary point cloud PC, in this case obtained from capturing a scene 1 with just five rather simple objects O1 to O5. Here, the imaging resolution is so high that the points collectively represent very smooth surfaces. The first object O1 is a standard element often used in tests of computer vision methods. It comprises a box-like base and a cylindrical protrusion from this base. The other four objects O2 to O5 are spheres with the same radius. Figure 9 shows a curvature histogram which is obtained from applying step b) of the inventive method to the point cloud PC of this rather simple scene 1. Again, the underlying octree resolution is chosen to be lower than the resolution of the imaging method, advantageously by an automated, computer-implemented method as explained above. The histogram of Figure 9 contains three distinct peaks: The first peak P1 corresponds to the points of the flat faces of the box-like base of object O1 and the lid of its cylinder, the second peak P2 corresponds to the cylindrical wall of object O1 and the third peak P3 corresponds to the points of the four spheres O2 to O5 with even higher local curvature. The other "ripples" forming the baseline of the curvature distribution can be associated with the transitional regions between the various faces of object O1. When applied to this rather simple scene 1, the method according to the present invention can be used to segment and label the point cloud PC into the individual objects O1 to O5 via a curvature-based discrimination and one or more subsequent distance-based region growing steps. For example, the points corresponding to the spheres O2 to O5 can be segmented into a common group in step c) based on their typical relatively high curvature and then segmented into individual spheres in step d) based on spatial proximity to each other. The resulting first clusters corresponding to the spheres can then directly be assigned the object label "sphere" as an example of an early run through step g). In this example, the "selected group" of step d) can favorably be a comparatively high-curvature group, which contains the points of the four spheres but also the high-curvature transitional regions between the faces of object O1. These transitional regions can be deselected in step e), for example based on their typical orientation and/or spatial extension, in addition to the high curvature values. The remaining point cloud RPC after deselecting the spheres O2 to O4 and the points of those transitional edges is shown in Figure 10. This remaining point cloud RPC can in principle be used for different purposes: A region growing method with rather loose membership criteria can be applied to grow all the points of object O1 into one regional cluster and assign a common object label to them. Alternatively, and more interestingly however, a region growing method with more seeds and more restrictive membership criteria can be used in step f) to segment the remaining point cloud RPC into its characteristic faces, for example the individual flat faces limiting the box-like base, the curved wall of the cylinder and its flat lid. This approach can be used to segment the points representing the object O1 into its constituting geometric primitives. This kind of sub-segmentation of an object is particularly useful in the context of a reverse-engineering task and it can contribute to deriving a CAx model of an object which has been captured by an imaging method.

### Reference Numerals

- 1: scene
- 41: data from measured point cloud
- 42: curve fitting result
- c1ₐ,c1_{b},: first clusters
- c2ₐ,c2_{b},: second clusters
- c'ₐ, c'_{b},: further clusters
- c"ₐ, c"_{b},: further clusters
- f: frequency
- F: floor
- g1,g2: groups of points
- g',g": groups of points
- G1-G4: Gaussian functions
- k: (signed) local principal curvature
- L1,L2,: object labels (pre-defined object types)
- 01-05: objects
- P1-P3: peaks
- PC: point cloud
- RPC: remaining point cloud
- RPC': updated remaining point cloud
- s: separation
- S: parametric surface
- t: threshold value
- x,y,z: cartesian coordinates

## Claims

1. A method for deriving a three-dimensional model of a scene (1) which comprises at least one object (01-05), the method comprising the following steps:
a) performing a physical measurement on the scene (1), which leads to a three-dimensional point cloud (PC),
b) generating at least one surface (S), in particular a parametric surface, from points of the point cloud (PC) and determining a respective local principal curvature (k) for the individual points of the point cloud (PC),
c) performing a first curvature-based segmentation of the point cloud (PC) into at least two groups of points (g1, g2) based on at least one threshold value (t) of the local principal curvature (k),
d) performing a first region-based segmentation of at least one selected group (g1) of the groups of points (g1, g2) obtained in step c), said segmentation being based on a region-growing method and leading to a plurality of first clusters (c1ₐ, c1_{b}),
e) determining a remaining point cloud (RPC) by deselecting a sub-set of these first clusters (c1_{b}) based on a pre-defined deselection criterion and discarding this sub-set (c1_{b}) from the point cloud (PC) at least for the following step f),
f) determining a plurality of second clusters (c2ₐ, c2_{b}) by performing a second region-based segmentation of the remaining point cloud (RPC), said segmentation being based on a region-growing method,
**characterized in that** the three-dimensional point cloud (PC) is handled as an octree-based voxelized representation, at least within step b),
and that the octree data structure is associated with a spatial resolution which is lower than the spatial resolution of the physical measurement of step a).

2. The method according to claim 1, comprising the following additional step:
g) assigning at least a sub-set of the second clusters (c2ₐ, c2_{b}) to at least one pre-defined object type (L1, L2), thereby classifying at least one object (01-05) or part of an object in the scene (1).

3. The method according to claim 1 or 2, wherein the scene (1) is an indoor scene, comprising at least one floor (F) and/or at least one wall of a building.

4. The method according to any of the preceding claims, wherein the scene (1) comprises at least a part of an industrial site and/or an industrially manufactured object (01-05).

5. The method according to any of the preceding claims, wherein the selected group of points (g1) segmented in step d) is a group with a corresponding curvature (k) below a pre-determined threshold value (t).

6. The method according to any of the preceding claims, wherein the pre-defined deselection criterion according to step e) is a size and/or a local surface orientation associated with the first clusters (c1ₐ, c1_{b}).

7. The method according to any of the preceding claims, wherein the octree data structure is associated with a spatial resolution which is lower than the spatial resolution of the physical measurement of step a) by a factor of at least two.

8. The method according to any of the preceding claims, wherein the spatial resolution of the octree data structure is determined automatically by performing the following steps:
- deriving a plurality of histograms (41) of curvature values (k) for the point cloud (PC) within the octree data structure, each histogram (41) obtained by using a different spatial resolution of the data structure,
- performing a curve fitting procedure of a plurality of Gaussian functions (G1-G4) to each histogram (41) and
- deriving an optimum spatial resolution of the data structure based on an achieved separation (s) of the plurality of Gaussian functions (G1-G4) obtained from the curve fitting procedures.

9. The method according to any of the preceding claims, wherein the three-dimensional point cloud (PC) is handled as an octree-based voxelized representation during steps d) and f), wherein the spatial resolution associated with this data structure is lower in step f) than in step d).

10. The method according to any of the preceding claims, wherein a second curvature-based segmentation of the point cloud or a subset thereof into at least two groups of points (g', g") is performed between steps e) and f).

11. The method according to claim 10, wherein a first further region-based segmentation is carried out on a first group of points (g') obtained from the second curvature-based segmentation, the first group of points (g') being associated with a curvature (k) below a pre-determined threshold (t),
and where a sub-set (c'_{b}) of the clusters (c'ₐ, c'_{b}) obtained in the first further region-based segmentation is deselected based on a pre-defined deselection criterion and discarded from the point cloud (RPC,PC) at least for carrying out step f).

12. The method according to claim 10 or 11, wherein a second further region-based segmentation is carried out on a second group of points (g") obtained from the second curvature-based segmentation, the second group of points (g") being associated with a curvature above a pre-determined threshold (t),
and where a sub-set (c"_{b}) of the clusters (c"ₐ, c"_{b}) obtained in the second further region-based segmentation is deselected based on a pre-defined deselection criterion and discarded from the point cloud (RPC, PC) at least for carrying out step f).

13. The method according to any of the preceding claims, wherein any second clusters (c2ₐ, c2₈b obtained in step f) which are associated with a bounding box that has at least 30% of the volume of a bounding box associated with the entire point cloud are classified as super clusters and any such super clusters are divided into smaller clusters in a further step.

14. A computer program product with program code, which is stored in machine-readable form on a medium, for carrying out a method according to one of the preceding claims when the program code is executed on a computer.

## Patentansprüche

1. Verfahren zum Ableiten eines dreidimensionalen Modells einer Szene (1), die mindestens ein Objekt (O1-O5) umfasst, wobei das Verfahren die folgenden Schritte umfasst:
a) Durchführen einer physikalischen Messung an der Szene (1), die zu einer dreidimensionalen Punktwolke (PC) führt,
b) Erzeugen mindestens einer Fläche (S), insbesondere einer parametrischen Fläche, aus Punkten der Punktwolke (PC) und Bestimmen einer jeweiligen lokalen Hauptkrümmung (k) für die einzelnen Punkte der Punktwolke (PC),
c) Durchführen einer ersten krümmungsbasierten Segmentierung der Punktwolke (PC) in mindestens zwei Gruppen von Punkten (g1, g2) basierend auf mindestens einem Schwellenwert (t) der lokalen Hauptkrümmung (k),
d) Durchführen einer ersten regionsbasierten Segmentierung mindestens einer ausgewählten Gruppe (g1) der in Schritt c) erhaltenen Gruppen von Punkten (g1, g2), wobei die Segmentierung auf einem Region-Growing-Verfahren basiert und zu mehreren ersten Clustern (c1ₐ, c1_{b}) führt,
e) Bestimmen einer restlichen Punktwolke (RPC) durch Abwählen eines Teilsatzes dieser ersten Cluster (c1_{b}) basierend auf einem vordefinierten Abwahlkriterium und Verwerfen des Teilsatzes (c1_{b}) aus der Punktwolke (PC) zumindest für den folgenden Schritt f),
f) Bestimmen mehrerer zweiter Cluster (c2ₐ, c2_{b}) durch Durchführen einer zweiten regionsbasierten Segmentierung der restlichen Punktwolke (RPC), wobei die Segmentierung auf einem Region-Growing-Verfahren basiert,
**dadurch gekennzeichnet, dass** die dreidimensionale Punktwolke (PC), zumindest in Schritt b), als eine Octree-basierte voxelisierte Darstellung gehandhabt wird,
und dass die Octree-Datenstruktur mit einer räumlichen Auflösung assoziiert ist, die niedriger ist als die räumliche Auflösung der physikalischen Messung von Schritt a).

2. Verfahren nach Anspruch 1, umfassend den folgenden zusätzlichen Schritt:
g) Zuweisen mindestens eines Teilsatzes der zweiten Cluster (c2ₐ, c2_{b}) zu mindestens einer vordefinierten Objektart (L1, L2), wodurch mindestens ein Objekt (O1-O5) oder ein Teil eines Objekts in der Szene (1) klassifiziert wird.

3. Verfahren nach Anspruch 1 oder 2, wobei die Szene (1) eine Innenraumszene ist, die mindestens einen Boden (F) und/oder mindestens eine Wand eines Gebäudes umfasst.

4. Verfahren nach einem der vorhergehenden Ansprüche, wobei die Szene (1) mindestens einen Teil eines Industriegeländes und/oder eines industriell hergestellten Objekts (O1-O5) umfasst.

5. Verfahren nach einem der vorhergehenden Ansprüche, wobei die in Schritt d) segmentierte ausgewählte Gruppe von Punkten (g1) eine Gruppe mit einer entsprechenden Krümmung (k) unterhalb eines vorbestimmten Schwellenwerts (t) ist.

6. Verfahren nach einem der vorhergehenden Ansprüche, wobei das vordefinierte Abwahlkriterium gemäß Schritt e) eine Größe und/oder eine lokale Flächenausrichtung ist, die mit den ersten Clustern (c1ₐ, c1_{b}) assoziiert ist.

7. Verfahren nach einem der vorhergehenden Ansprüche, wobei die Octree-Datenstruktur mit einer räumlichen Auflösung assoziiert ist, die um einen Faktor von mindestens zwei niedriger als die räumliche Auflösung der physikalischen Messung von Schritt a) ist.

8. Verfahren nach einem der vorhergehenden Ansprüche, wobei die räumliche Auflösung der Octree-Datenstruktur automatisch durch Durchführen der folgenden Schritte bestimmt wird:
- Ableiten mehrerer Histogramme (41) von Krümmungswerten (k) für die Punktwolke (PC) innerhalb der Octree-Datenstruktur, wobei jedes Histogramm (41) unter Verwendung einer unterschiedlichen räumlichen Auflösung der Datenstruktur erhalten wird,
- Durchführen einer Kurvenanpassungsprozedur mehrerer Gauß-Funktionen (G1-G4) an jedem Histogramm (41) und
- Ableiten einer optimalen räumlichen Auflösung der Datenstruktur basierend auf einer erreichten Trennung (s) der aus den Kurvenanpassungsprozeduren erhaltenen mehreren Gauß-Funktionen (G1-G4).

9. Verfahren nach einem der vorhergehenden Ansprüche, wobei die dreidimensionale Punktwolke (PC) während der Schritte d) und f) als eine Octree-basierte voxelisierte Darstellung gehandhabt wird, wobei die mit der Datenstruktur assoziierte räumliche Auflösung in Schritt f) niedriger ist als in Schritt d).

10. Verfahren nach einem der vorhergehenden Ansprüche, wobei eine zweite krümmungsbasierte Segmentierung der Punktwolke oder eines Teilsatzes davon in mindestens zwei Gruppen von Punkten (g', g") zwischen den Schritten e) und f) durchgeführt wird.

11. Verfahren nach Anspruch 10, wobei eine erste weitere regionsbasierte Segmentierung an einer ersten Gruppe von Punkten (g') durchgeführt wird, die aus der zweiten krümmungsbasierten Segmentierung erhalten wird, wobei die erste Gruppe von Punkten (g') mit einer Krümmung (k) unterhalb eines vorbestimmten Schwellenwerts (t) assoziiert ist,
und wobei ein in der ersten weiteren regionsbasierten Segmentierung erhaltener Teilsatz (c'_{b}) der Cluster (c'ₐ, c'_{b}) basierend auf einem vordefinierten Abwahlkriterium abgewählt und zumindest zum Ausführen von Schritt f) aus der Punktwolke (RPC, PC) verworfen wird.

12. Verfahren nach Anspruch 10 oder 11, wobei eine zweite weitere regionsbasierte Segmentierung an einer zweiten Gruppe von Punkten (g") durchgeführt wird, die aus der zweiten krümmungsbasierten Segmentierung erhalten wird, wobei die zweite Gruppe von Punkten (g") mit einer Krümmung oberhalb eines vorbestimmten Schwellenwerts (t) assoziiert ist,
und wobei ein in der zweiten weiteren regionsbasierten Segmentierung erhaltener Teilsatz (c"_{b}) der Cluster (c"ₐ, c"_{b}) basierend auf einem vordefinierten Abwahlkriterium abgewählt und zumindest zum Ausführen von Schritt f) aus der Punktwolke (RPC, PC) verworfen wird.

13. Verfahren nach einem der vorhergehenden Ansprüche, wobei jegliche in Schritt f) erhaltenen zweiten Cluster (c2ₐ, c2_{b}), die mit einem Begrenzungsrahmen assoziiert sind, der mindestens 30 % des Volumens eines Begrenzungsrahmens aufweist, der mit der gesamten Punktwolke assoziiert ist, als Supercluster klassifiziert werden und jegliche solchen Supercluster in einem weiteren Schritt in kleinere Cluster unterteilt werden.

14. Computerprogrammprodukt mit Programmcode, der in maschinenlesbarer Form auf einem Medium gespeichert ist, zum Ausführen eines Verfahrens nach einem der vorhergehenden Ansprüche, wenn der Programmcode auf einem Computer ausgeführt wird.

## Revendications

1. Un procédé de dérivation d'un modèle en trois dimensions d'une scène (1), qui comprend au moins un objet (O1 à O5), le procédé comprenant les stades suivants :
a) effectuer une mesure physique sur la scène (1), qui donne un nuage (PC) de points en trois dimensions,
b) créer au moins une surface (S), en particulier une surface paramétrique, à partir de points du nuage (PC) de points et déterminer une courbure (k) locale principale respective pour les points individuels du nuage (PC) de points,
c) effectuer une première segmentation reposant sur la courbure du nuage (PC) de points en au moins deux groupes de points (g1, g2) sur la base d'au moins une valeur (t) de seuil de la courbure (k) locale principale,
d) effectuer une première segmentation sur la base de la région d'au moins un groupe (g1) sélectionné de groupes de points (g1, g2) obtenus dans le stade c), ladite segmentation reposant sur un procédé de croissance de région et donnant une pluralité de premières partitions (c1ₐ, c1_{b}),
e) déterminer un nuage (RPC) restant de points en désélectionnant un sous-ensemble de ces premières partitions (c1_{b}) sur la base d'un critère de désélection défini à l'avance et écarter ce sous-ensemble (c1_{b}) du nuage (PC) de points au moins pour le stade f) suivant,
f) déterminer une pluralité de deuxièmes partitions (c2ₐ, c2_{b}) en effectuant une deuxième segmentation, sur la base d'une région, du nuage (RPC) restant de points, ladite segmentation reposant sur un procédé de croissance de région,
**caractérisé en ce que** le nuage (PC) de points en trois dimensions est manipulé sous la forme d'une représentation voxelisée à base d'octree au moins dans le stade b),
et **en ce que** la structure de données d'octree est associée à une résolution spatiale, qui est plus petite que la résolution spatiale de la mesure physique du stade a).

2. Le procédé suivant la revendication 1, comprenant le stade supplémentaire suivant :
g) affecter au moins un sous-ensemble des deuxièmes partitions (C2ₐ, c2_{b}) à au moins un type (L1, L2) d'objet défini à l'avance en classant ainsi au moins un objet (O1 à O5) ou une partie d'un objet dans la scène (1).

3. Le procédé suivant la revendication 1 ou 2, dans lequel la scène (1) est une scène d'intérieur, comprenant au moins un plancher (F) et/ou au moins un mur d'un bâtiment.

4. Le procédé suivant l'une quelconque des revendications précédentes, dans lequel la scène (1) comprend au moins une partie d'un site industriel et/ou d'un objet (O1 à O5) manufacturé industriellement.

5. Le procédé suivant l'une quelconque des revendications précédentes, dans lequel le groupe sélectionné de points (g1) segmenté dans le stade d) est un groupe ayant une courbure (k) correspondante en dessous d'une valeur (t) de seuil déterminée à l'avance.

6. Le procédé suivant l'une quelconque des revendications précédentes, dans lequel le critère de sélection défini à l'avance suivant le stade e) est une dimension et/ou une orientation locale de surface associée aux premières partitions (c1ₐ, c1_{b}).

7. Le procédé suivant l'une quelconque des revendications précédentes, dans lequel la structure de données d'octree est associée à une résolution spatiale, qui est plus petite que la résolution spatiale de la mesure physique du stade a) d'un facteur d'au moins deux.

8. Le procédé suivant l'une quelconque des revendications précédentes, dans lequel la résolution spatiale de la structure de données d'octree est déterminée automatiquement en effectuant les stades suivants :
- déduire une pluralité d'histogrammes (41) de valeurs (k) de courbure pour le nuage (PC) de points dans la structure de données d'octree, chaque histogramme (41) étant obtenu en utilisant une résolution spatiale différente de la structure de données,
- effectuer une procédure d'ajustement de courbe d'une pluralité de fonctions (G1 à G4) gaussiennes à chaque histogramme (41), et
- déduire une résolution spatiale optimum de la structure de données sur la base de la séparation (s) obtenue de la pluralité de fonctions (G1 à G4) gaussiennes obtenues à partir des procédures d'ajustement de courbe.

9. Le procédé suivant l'une quelconque des revendications précédentes, dans lequel le nuage (PC) de points en trois dimensions est manipulé sous la forme d'une représentation voxelisée à base d'octree pendant les stades d) et f), dans lequel la résolution spatiale associée à cette structure de données est plus petite dans le stade f) que dans le stade d).

10. Le procédé suivant l'une quelconque des revendications précédentes, dans lequel une deuxième segmentation sur la base de la courbure du nuage de points ou d'un sous-ensemble de celui-ci en au moins deux groupes de points (g', g"), est effectuée entre les stades e) et f).

11. Le procédé suivant la revendication 10, dans lequel une première autre segmentation sur la base d'une région est effectuée sur un premier groupe de points (g') obtenus à partir de la deuxième segmentation sur la base d'une courbure, le premier groupe de points (g') étant associé à une courbure (k) en dessous d'un seuil (t) déterminé à l'avance, et dans lequel un sous-ensemble (C'_{b}) des partitions (C'ₐ, C'_{b}) obtenues dans la première autre segmentation sur la base d'une région est désélectionné sur la base d'un critère prédéfini de désélection et écarté du nuage (RPC, PC) de points au moins pour effectuer le stade f).

12. Le procédé suivant la revendication 10 ou 11, dans lequel une deuxième autre segmentation sur la base d'une région est effectuée sur un deuxième groupe de points (g") obtenus à partir de la deuxième segmentation sur la base d'une courbure, le deuxième groupe de points (g") étant associé à une courbure au-dessus d'un seuil (t) déterminé à l'avance,
et dans lequel un sous-ensemble (C"_{b}) des partitions (C"ₐ, C"_{b}) obtenues dans la deuxième autre segmentation sur la base d'une région est désélectionné sur la base d'un critère prédéfini de désélection et écarté du nuage (RPC, PC) de points au moins pour effectuer le stade f).

13. Le procédé suivant l'une quelconque des revendications précédentes, dans lequel toutes les deuxièmes partitions (c2ₐ, c2_{b}) obtenues dans le stade f), qui sont associées à une boîte de liaison, qui a au moins 30 % du volume d'une boîte de liaison associée au nuage de points entier, sont classées comme des super partitions et toutes les super partitions de ce genre sont subdivisées en des partitions plus petites dans un autre stade.

14. Un produit de programme d'ordinateur, ayant un code de programme, qui est mis en mémoire sous une forme déchiffrable automatiquement sur un support pour effectuer un procédé suivant l'une des revendications précédentes, lorsque le code de programme est exécuté sur un ordinateur.
